# EUROPÄISCHE PATENTANMELDUNG

(11) **EP 2 600 038 A2**
(43) Veröffentlichungstag der Anmeldung: **05.06.2013**
(21) Anmeldenummer: 12186755.0
(22) Anmeldetag: 01.10.2012
(51) Int. Cl.: F16H 61/04

(54) **Steuerungseinrichtung eines Kraftfahrzeugs**

(30) Priorität: 30.11.2011 DE 102011087376
(71) Anmelder: ZF Friedrichshafen AG, 88038 Friedrichshafen (DE)
(72) Erfinder: Kaller, Mario, 88048 Friedrichshafen (DE); Steinborn, Mario, 88046 Friedrichshafen (DE)

(57) **Zusammenfassung**

Steuerungseinrichtung eines Kraftfahrzeugs, insbesondere Getriebesteuerungseinrichtung (11), die bei Vorliegen einer Zahn-auf-Zahn-Stellung eines formschlüssigen Schaltelements (6) ein Ansteuersignal für mindestens einen Aktuator zum Auflösen der Zahn-auf-Zahn-Stellung ermittelt, wobei die Steuerungseinrichtung das oder jedes Ansteuersignal zum Auflösen der Zahn-auf-Zahn-Stellung abhängig von mindestens einer Betriebsbedingung des Kraftfahrzeugs derart ermittelt, dass entweder ein Auflösen der Zahn-auf-Zahn-Stellung schnell mit geringem Komfort oder langsam mit hohem Komfort erfolgt.

## Beschreibung

Die Erfindung betrifft eine Steuerungseinrichtung eines Kraftfahrzeugs, insbesondere eine Getriebesteuerungseinrichtung, nach dem Oberbegriff des Patentanspruchs 1. Des Weiteren betrifft die Erfindung ein Verfahren zur Auflösung einer Zahn-auf-Zahn-Stellung nach dem Oberbegriff des Patentanspruchs 10.

Bei der Ausführung einer Schaltung in einem automatisierten Schaltgetriebe unter Beteiligung eines formschlüssigen Schaltelements sowie bei der Ausführung einer Schaltung unter Beteiligung eines zwischen zwei Getriebe geschalteten, formschlüssigen Schaltelements kann es zu Zahn-auf-Zahn-Stellungen kommen, die ein Schließen eines formschlüssigen Schaltelements verhindern. Derartige Zahn-auf-Zahn-Stellungen müssen zur Ausführung einer Schaltung aufgelöst werden. Zur Auflösung solcher Zahn-auf-Zahn-Stellungen dienen entsprechende Aktuatoren. Aus dem Stand der Technik sind unterschiedliche Methoden bzw. Verfahren zum Auflösen einer Zahn-auf-Zahn-Stellung an einem formschlüssigen Schaltelement bekannt, wobei sich die unterschiedlichen Methoden bzw. Verfahren insbesondere durch die an der Zahn-auf-Zahn-Stellung beteiligten Aktuatoren unterscheiden. Bei der Auflösung einer Zahn-auf-Zahn-Stellung an einem formschlüssigen Schaltelement sind grundsätzlich im Widerspruch stehende Kriterien zu erfüllen, nämlich einerseits eine möglichst schnelle Auflösung der Zahn-auf-Zahn-Stellung und andererseits eine möglichst komfortable Auflösung derselben, wobei eine Auflösung einer Zahn-auf-Zahn-Stellung an einem formschlüssigen Schaltelement umso komfortabler ist, je geringer hierbei Stöße auf den Antriebsstrang wirken.

Aus der DE 10 2006 046 605 A1 ist ein Verfahren zum Auflösen einer Zahn-auf-Zahn-Stellung an einem formschlüssigen Schaltelement eines Getriebes bekannt, wobei nach diesem Stand der Technik die Zahn-auf-Zahn-Stellung unter Verwendung einer Fahrkupplung oder einer Getriebebremse aufgelöst werden kann.

Aus der DE 10 2006 058 981 A1 ist ein Verfahren zum Auflösen einer Zahn-auf-Zahn-Stellung an einem zwischen zwei Getriebe positionierten Schaltelement bekannt, wobei nach diesem Stand der Technik ein Aktuator zur Auflösung der Zahn-auf-Zahn-Stellung verwendet wird, mithilfe dessen eine Eingangswelle bzw. eine Antriebswelle eines nachgeschalteten Getriebes verdreht werden kann.

Hiervon ausgehend liegt der vorliegenden Erfindung die Aufgabe zu Grunde, eine neuartige Steuerungseinrichtung eines Kraftfahrzeugs und ein Verfahren zur Auflösung einer Zahn-auf-Zahn-Stellung zu schaffen.

Diese Aufgabe wird durch eine Steuerungseinrichtung gemäß Patentanspruch 1 gelöst.

Erfindungsgemäß ermittelt die Steuerungseinrichtung das oder jedes Ansteuersignal zum Auflösen der Zahn-auf-Zahn-Stellung am formschlüssigen Schaltelement abhängig von mindestens einer Betriebsbedingung des Kraftfahrzeugs derart, dass entweder ein Auflösen der Zahn-auf-Zahn-Stellung relativ schnell mit relativ geringem Komfort oder ein Auflösen der Zahn-auf-Zahn-Stellung relativ langsam mit relativ hohem Komfort erfolgt.

Mit der hier vorliegenden Erfindung wird erstmals vorgeschlagen, dass eine Steuerungseinrichtung eines Kraftfahrzeugs Steuersignale für den oder jeden Aktuator zum Auflösen der Zahn-auf-Zahn-Stellung abhängig von mindestens einer Betriebsbedingung des Kraftfahrzeugs ermittelt, nämlich derart, dass abhängig von der oder jeder Betriebsbedingung des Kraftfahrzeugs entweder ein Auflösen der Zahn-auf-Zahn-Stellung relativ schnell mit relativ geringem Komfort oder relativ langsam mit relativ hohem Komfort erfolgt. Hierdurch können Zahn-auf-Zahn-Stellungen an formschlüssigen Schaltelementen situationsbedingt optimal aufgelöst werden.

Nach einer vorteilhaften Weiterbildung ermittelt die Steuerungseinrichtung das oder jedes Ansteuersignal zum Auflösen der Zahn-auf-Zahn-Stellung am formschlüssigen Schaltelement abhängig von einer Masse des Kraftfahrzeugs und/ oder abhängig von einer Geschwindigkeit des Kraftfahrzeugs und/ oder abhängig von einer Fahrsituation des Kraftfahrzeugs und/ oder abhängig von einer Achsübersetzung und/ oder abhängig von einem Ziel-Gang der auszuführenden Schaltung auszuführenden und/ oder abhängig von einer angeforderten Schaltdynamik. Das Erzeugen des Ansteuersignals für den oder jeden an der Auflösung der Zahn-auf-Zahn-Stellung am formschlüssigen Schaltelement beteiligten Aktuator abhängig von den obigen Betriebsbedingungen ist besonders bevorzugt.

Nach einer vorteilhaften Weiterbildung ermittelt die Steuerungseinrichtung abhängig von der oder jeder Betriebsbedingung des Kraftfahrzeugs eine Methode zum Auflösen der Zahn-auf-Zahn-Stellung und abhängig von der Methode Ansteuersignale für den oder jeden an der Methode beteiligten Aktuator und/oder die Steuerungseinrichtung ermittelt abhängig von der oder jeder Betriebsbedingung für eine Methode zum Auflösen der Zahn-auf-Zahn-Stellung die Parametrierung derselben und abhängig von der Parametrierung Ansteuersignale für den oder jeden an der Methode beteiligten Aktuator. Nach dieser Weiterbildung der Erfindung wird abhängig von der oder jeder Betriebsbedingung eine Methode bzw. ein Verfahren zur Auflösung der Zahn-auf-Zahn-Stellung ausgewählt und/ oder für eine ausgewählte Methode bzw. ausgewähltes Verfahren wird die Parametrierung derselben bestimmt, um so abhängig von der ausgewählten Methode und/ oder der Parametrierung derselben das Ansteuersignal für den oder jeden an der Auflösung der Zahn-auf-Zahn-Stellung beteiligten Aktuator zu ermitteln. Dadurch, dass einerseits die Methode und andererseits die Parametrierung der Methode abhängig von der oder jeder Betriebsbedingung ermittelt wird, ist eine besonders bevorzugte Auflösung von Zahn-auf-Zahn-Stellungen abhängig von mindestens einer Betriebsbedingung des Antriebsstrangs möglich.

Das erfindungsgemäße Verfahren zur Auflösung einer Zahn-auf-Zahn-Stellung ist in Patentanspruch 10 definiert.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: ein Schema eines Antriebsstrangs mit einer erfindungsgemäßen Steuerungseinrichtung;
- Fig. 2: ein Signalflussdiagramm zur Verdeutlichung einer Betriebsweise der erfindungsgemäßen Steuerungseinrichtung; und
- Fig. 3: ein Signalflussdiagramm zur Verdeutlichung einer weiteren Betriebsweise der erfindungsgemäßen Steuerungseinrichtung.

Die hier vorliegende Erfindung betrifft eine Steuerungseinrichtung, insbesondere eine Getriebesteuerungseinrichtung, eines Kraftfahrzeugs und ein Verfahren zur Auflösung einer Zahn-auf-Zahn-Stellung eines formschlüssigen Schaltelements, insbesondere eines getriebeinternen, formschlüssigen Schaltelements eines automatisierten Schaltgetriebes oder eines zwischen zwei Getriebe geschalteten, formschlüssigen Schaltelements.

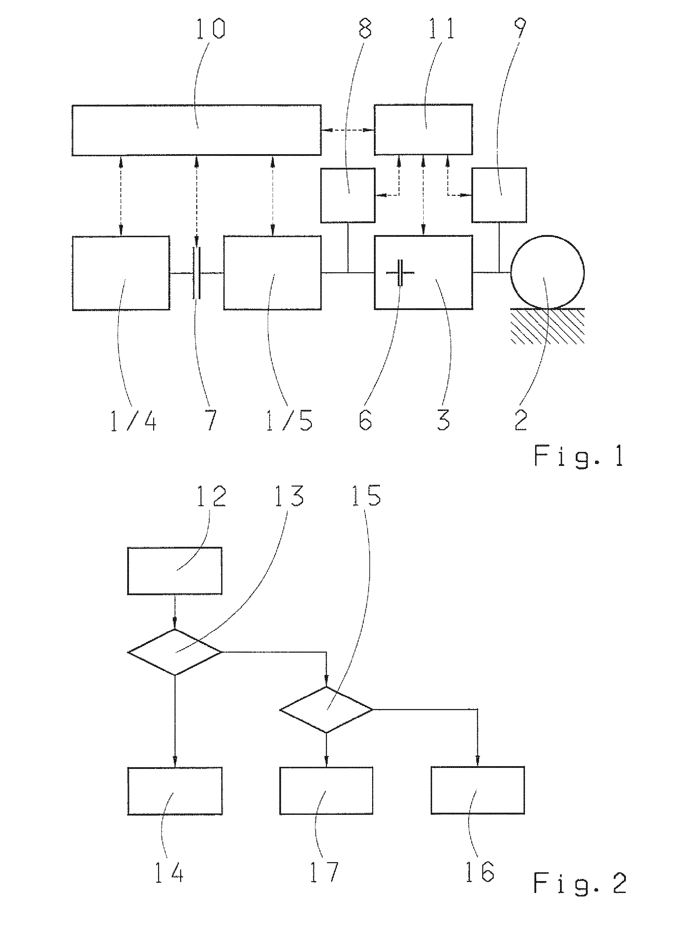

Fig. 1 zeigt stark schematisiert einen Antriebsstrang eines Kraftfahrzeugs mit einem Antriebsaggregat 1 und einen zwischen das Antriebsaggregat 1 und einen Abtrieb 2 geschalteten Getriebe 3. Das Getriebe 3 wandelt Drehzahlen und Drehmoment und stellt das Zugkraftangebot des Antriebsaggregats 1 am Abtrieb 2 bereit. Das Antriebsaggregat 1 umfasst im gezeigten Ausführungsbeispiel einen Verbrennungsmotor 4 und eine elektrischen Maschine 5 und ist als Hybridantrieb gebildet.

Bereits an dieser Stelle sei darauf hingewiesen, dass die Erfindung nicht auf die Verwendung an einem Hybridfahrzeug beschränkt ist. Vielmehr kann die Erfindung auch an anderen Antriebssträngen zum Einsatz kommen.

Das zwischen das Antriebsaggregat 1 und den Abtrieb 4 geschaltete Getriebe 3 ist ein automatisiertes Schaltgetriebe, welches mehrere formschlüssige Schaltelemente 6 umfasst. Zwischen den Verbrennungsmotor 4 und die elektrische Maschine 5 des Antriebsaggregats 1 ist eine Fahrkupplung 7 geschaltet, die dann, wenn der Verbrennungsmotor 4 vom Abtrieb 2 abgekoppelt ist, geöffnet ist, und die dann, wenn der Verbrennungsmotor 4 an den Abtrieb 2 angekoppelt ist, geschlossen ist. Ein solcher Antriebsstrang wird auch als Parallelhybrid-Antriebsstrang bezeichnet. Ferner verfügt gemäß Fig. 1 der Antriebsstrang über eine getriebeeingangsseitige Getriebebremse 8 und eine Betriebsbremse 9.

Dem Antriebsaggregat 1 ist eine Motorsteuerungseinrichtung 10 zugeordnet, um den Betrieb des Antriebsaggregats 1 zu steuern und/ oder zu regeln. Hierzu tauscht die Motorsteuerungseinrichtung 10 im Sinne der in Fig. 1 gezeigten, gestrichelten Pfeile mit dem Antriebsaggregat 1 Daten aus, insbesondere mit dem Verbrennungsmotor 4 und der elektrischen Maschine 5, sowie im gezeigten, exemplarischen Antriebsstrangschema mit der zwischen dieselben geschalteten Fahrkupplung 7.

Der Betrieb des Getriebes 3 wird von einer dem Getriebe 3 zugeordneten Getriebesteuerungseinrichtung 11 gesteuert und/ oder geregelt, wobei gemäß Fig. 1 die Getriebesteuerungseinrichtung 11 einerseits mit dem Getriebe 3 und andererseits mit der Motorsteuerungseinrichtung 10 im Sinne der gezeigten, gestrichelten Pfeile Daten austauscht.

Weiterhin tauscht die Getriebesteuerungseinrichtung 11 im in Fig. 1 gezeigten, exemplarischen Antriebsstrangschema mit der Getriebebremse 8 und der Betriebsbremse 9 Daten aus.

Bei Ausführung einer Schaltung bzw. eines Gangwechsels in dem automatisierten Schaltgetriebe 3 des Antriebsstrangs der Fig. 1 kann an einem formschlüssigen Schaltelement 6 desselben eine sogenannte Zahn-auf-Zahn-Stellung auftreten, die aufgelöst werden muss.

An der Auflösung einer solchen Zahn-auf-Zahn-Stellung ist mindestens ein Aktuator beteiligt, für den die Getriebesteuerungseinrichtung 11 ein entsprechendes Ansteuersignal ermittelt und dem jeweiligen Aktuator unmittelbar oder mittelbar über eine andere Steuerungseinrichtung bereitstellt. Als mögliche Aktuatoren zur Auflösung einer solchen Zahn-auf-Zahn-Stellung stehen insbesondere der Verbrennungsmotor 4 und/ oder die elektrische Maschine 5 und/oder die Fahrkupplung 7 und/ oder die Getriebebremse 8 zur Verfügung.

Im Sinne der hier vorliegenden Erfindung ermittelt die Steuerungseinrichtung das oder jedes Ansteuersignal für den oder jeden Aktuator zum Auflösen der Zahn-auf-Zahn-Stellung am formschlüssigen Schaltelement 6 abhängig von mindestens einer Betriebsbedingung des Kraftfahrzeugs derart, dass entweder ein Auflösen der Zahn-auf-Zahn-Stellung am formschlüssigen Schaltelement 6 relativ schnell mit relativ geringem Komfort oder ein Auflösen der Zahn-auf-Zahn-Stellung am formschlüssigen Schaltelement 6 relativ langsam mit relativ hohem Komfort erfolgt, wobei der Komfort in erster Linie durch die Stöße bestimmt wird, die bei der Auflösung der Zahn-auf-Zahn-Stellung auf den Antriebsstrang einwirken. Je geringer diese Stöße sind, desto höher ist der Komfort beim Auflösen der Zahn-auf-Zahn-Stellung.

Vorzugsweise ermittelt die Getriebesteuerungseinrichtung 11 abhängig von der oder jeder Betriebsbedingung des Kraftfahrzeugs eine Methode bzw. ein Verfahren zum Auflösen der Zahn-auf-Zahn-Stellung am formschlüssigen Schaltelement 6, wobei von der ausgewählten Methode die an der Auflösung der Zahn-auf-Zahn-Stellung beteiligten Aktuatoren abhängig sind, und/oder die Steuerungseinrichtung 11 ermittelt abhängig von der oder jeder Betriebsbedingung des Kraftfahrzeugs für eine Methode die Parametrierung derselben, wobei abhängig von der Methode und der Parametrierung der Methode Ansteuersignale für den oder jeden an der Auflösung der Zahn-auf-Zahn-Stellung beteiligten Aktuator ermittelt wird.

Hiernach ist demnach vorgesehen, einerseits eine Methode zum Auflösen der Zahn-auf-Zahn-Stellung und damit die beteiligten Aktuatoren abhängig von der oder jeder Betriebsbedingung festzulegen und/ oder für eine Methode zum Auflösen der Zahn-auf-Zahn-Stellung die Parametrierung derselben abhängig von der oder jeder Betriebsbedingung zu bestimmen, um so entweder ein Auflösen der Zahn-auf-Zahn-Stellung relativ schnell mit relativ geringem Komfort oder relativ langsam mit relativ hohem Komfort ermöglichen, und zwar vorzugsweise in definierten Abstufungen der Schnelligkeit und des Komforts.

Nach einer vorteilhaften Weiterbildung der Erfindung ermittelt die Steuerungseinrichtung, nämlich die Getriebesteuerungseinrichtung 11, das oder jedes Ansteuersignal für den oder jeden Aktuator zum Auflösen der Zahn-auf-Zahn-Stellung abhängig von einer Masse des Kraftfahrzeugs und/ oder abhängig von einer Geschwindigkeit des Kraftfahrzeugs und/ oder abhängig von einer Fahrsituation des Kraftfahrzeugs und/oder abhängig von einer Achsübersetzung eines Achsgetriebes und/ oder abhängig von einem Ziel-Gang der auszuführenden Schaltung und/ oder abhängig von einer angeforderten Schaltdynamik. Die Verwendung dieser Betriebsbedingungen ist bevorzugt, wobei diese Betriebsbedingungen entweder alleine oder in beliebiger Kombination miteinander verwendet werden können, um das oder jedes Ansteuersignal zum Auflösen der Zahn-auf-Zahn-Stellung zu ermitteln. Es können auch andere Betriebsbedingungen zusätzlich oder alternativ zu den oben genannten Betriebsbedingungen des Kraftfahrzeugs verwendet werden.

Dann, wenn die Masse des Kraftfahrzeugs relativ groß ist, ermittelt die Getriebesteuerungseinrichtung 11 das oder jedes Ansteuersignal zum Auflösen der Zahn-auf-Zahn-Stellung derart, dass das Auflösen der Zahn-auf-Zahn-Stellung relativ schnell mit relativ geringem Komfort erfolgt, wohingegen dann, wenn die Masse des Kraftfahrzeugs relativ klein ist, das oder jedes Ansteuersignal zum Auflösen der Zahn-auf-Zahn-Stellung derart ermittelt wird, dass das Auflösen der Zahn-auf-Zahn-Stellung relativ langsam mit relativ hohem Komfort erfolgt.

Dabei kann die Fahrzeugmasse zum Beispiel abhängig davon sein, ob auf ein Vorhandensein oder ein Nicht-Vorhandensein eines Anhängers bzw. eines Sattels am Kraftfahrzeug erkannt wird. Dann, wenn ein Anhänger oder Sattel vorliegt, werden Ansteuersignale erzeugt, mithilfe derer die Auflösung der Zahn-auf-Zahn-Stellung relativ schnell mit relativ geringem Komfort erfolgt, wohingegen im anderen Fall, also bei Fehlen eines Anhängers oder Sattels, das oder jedes Ansteuersignal zum relativ langsamen Auflösen der Zahn-auf-Zahn-Stellung mit relativ hohem Komfort ermittelt.

Dann, wenn die Geschwindigkeit des Kraftfahrzeugs relativ groß ist, ermittelt die Steuerungseinrichtung, nämlich die Getriebesteuerungseinrichtung 11, das oder jedes Ansteuersignal zum Auflösen der Zahn-auf-Zahn-Stellung derart, dass die Auflösung relativ schnell mit relativ geringem Komfort erfolgt, wohingegen dann, wenn die Geschwindigkeit des Kraftfahrzeugs relativ klein ist, die Steuerungseinrichtung das oder jedes Ansteuersignals derart ermittelt, dass die Auflösung der Zahn-auf-Zahn-Stellung relativ langsam mit relativ hohem Komfort erfolgt. Insbesondere dann, wenn sich das Kraftfahrzeugs im Stillstand befindet, wirken sich Stöße auf den Antriebsstrang besonders stark aus, sodass im Stillstand das oder jedes Ansteuersignal für den Aktuator zum Auflösen der Zahn-auf-Zahn-Stellung derart ermittelt wird, dass diese Auflösung relativ langsam mit relativ hohem Komfort erfolgt.

Dann, wenn die Übersetzung eines Achsgetriebes des Kraftfahrzeugs relativ klein ist, und/ oder wenn die Übersetzung des Ziel-Gangs der auszuführenden Schaltung des Kraftfahrzeugs relativ klein ist, ermittelt die Getriebesteuerungseinrichtung 11 Ansteuersignale zum Auflösen der Zahn-auf-Zahn-Stellung derart, dass die Auflösung relativ schnell mit relativ geringem Komfort erfolgt.

Dann, wenn die Übersetzung des Achsgetriebes und/ oder die Übersetzung des Ziel-Gangs relativ groß ist, wird das oder jedes Ansteuersignal derart ermittelt, dass das Auflösen der Zahn-auf-Zahn-Stellung relativ langsam mit relativ hohem Komfort erfolgt.

Als Fahrsituation des Kraftfahrzeugs, in Abhängigkeit derer die Getriebesteuerungseinrichtung 11 das oder jedes Ansteuersignal für den oder jeden an der Auflösung der Zahn-auf-Zahn-Stellung beteiligten Aktuator ermittelt, kann der Fahrwiderstand und/ oder eine Fahrbahnsituation und/ oder eine fahrerseitige Bremsbetätigung berücksichtigt werden. Dann, wenn ein Fahrwiderstand relativ hoch ist, ermittelt die Getriebesteuerungseinrichtung 11 das oder jedes Ansteuersignal zum Auflösen der Zahn-auf-Zahn-Stellung derart, dass die Auflösung relativ schnell mit relativ geringem Komfort erfolgt, wohingegen dann, wenn der Fahrwiderstand relativ gering ist, Ansteuersignale derart ermittelt werden, dass die Auflösung der Zahn-auf-Zahn-Stellung relativ langsam mit relativ hohem Komfort erfolgt.

Dann, wenn das Fahrzeug in einem Off-Road Betrieb betrieben wird, ermittelt die Getriebesteuerungseinrichtung 11 das oder jedes Ansteuersignal für den jeweiligen Aktuator derart, dass das Auflösen der Zahn-auf-Zahn-Stellung relativ schnell mit relativ geringem Komfort erfolgt, wohingegen in einem Straßenbetrieb das oder jedes Ansteuersignal für jeweiligen Aktuator derart ermittelt wird, dass das Auflösen der Zahn-auf-Zahn-Stellung relativ langsam mit relativ hohem Komfort durchgeführt wird.

Die Ermittlung des oder jedes Ansteuersignals zur Auflösung der Zahn-auf-Zahn-Stellung kann ebenfalls abhängig von einer fahrerseitigen Betätigung der Betriebsbremse 9 und/ oder abhängig von einer fahrerseitigen Betätigung einer Parkbremse erfolgen. Für die fahrerseitige Betätigung der Betriebsbremse 9 kann vorgesehen sein, dass dann, wenn die fahrerseitige Betätigung der Betriebsbremse 9 derart erfolgt, dass ein Bremsdruck größer als ein Grenzwert ist, ein relativ schnelles Auflösen einer Zahn-auf-Zahn-Stellung mit relativ geringem Komfort von der Steuerungseinrichtung 11 über das oder jedes Ansteuersignal für den oder jeden Aktuator vorgegeben wird, wohingegen dann, wenn aufgrund der fahrerseitigen Betätigung der Betriebsbremse 9 der resultierende Bremsdruck kleiner als ein Grenzwert ist, von der Steuerungseinrichtung 11 eine Auflösung der Zahn-auf-Zahn-Stellung relativ langsam mit relativ hohem Komfort durch entsprechende Ermittlung des oder jedes Ansteuersignals vorgegeben wird.

Als weitere Betriebsbedingung, auf Grundlage derer die Getriebesteuerungseinrichtung 11 die Auflösung von Zahn-auf-Zahn-Stellungen beeinflusst, kann eine fahrerseitig oder steuerungsseitig angeforderte Schaltdynamik berücksichtigt werden. Je höher die Sportlichkeit für eine geforderte Schaltdynamik ist, desto schneller und mit desto geringerem Komfort wird die Getriebesteuerungseinrichtung 11 die Auflösung der Zahn-auf-Zahn-Stellung über entsprechende Ansteuersignale vorgeben.

Alternativ oder zusätzlich zur Schaltdynamik kann die Getriebesteuerungseinrichtung 11 das oder jedes Ansteuersignal abhängig von einer fahrerseitigen oder steuerungsseitigen Komfortanforderung und/ oder abhängig von einer Fahrertyperkennung ermitteln. Ist der fahrerseitig oder steuerungsseitig angeforderte Komfort relativ gering und/ oder ist ein erkannter Fahrertyp relativ sportlich, so ermittelt die Steuerungseinrichtung, nämlich die Getriebesteuerungseinrichtung 11, das oder jedes Ansteuersignal für den Aktuator zum Auflösen der Zahn-auf-Zahn-Stellung derart, dass diese Auflösung relativ schnell mit relativ geringem Komfort erfolgt.

Als weitere Betriebsbedingungen kann eine Temperatur, zum Beispiel eine Getriebetemperatur, berücksichtigt werden, wobei bei relativ geringer Temperatur die Auflösung der Zahn-auf-Zahn-Stellung von der Getriebesteuerungseinrichtung 11 mit relativ hoher Geschwindigkeit und relativ geringem Komfort vorgegeben wird, wohingegen bei relativ hoher Temperatur diese Auflösung mit relativ langsamer Geschwindigkeit und relativ hohem Komfort erfolgt.

Als weitere Betriebsbedingung kann die Aktivierung von Nebenaggregaten und/ oder Nebenabtrieben des Kraftfahrzeugs berücksichtigt werden, um abhängig hiervon das oder jedes Ansteuersignal zum Auflösen der Zahn-auf-Zahn-Stellung zu ermitteln. Dann, wenn mindestens ein aktiviertes Nebenaggregat und/oder mindestens ein aktivierter Nebenabtrieb vorliegt, ermittelt die Getriebesteuerungseinrichtung 11 das oder jedes Ansteuersignal derart, dass das Auflösen der Zahn-auf-Zahn-Stellung relativ schnell mit relativ geringem Komfort erfolgt. Liegen hingegen deaktivierte Nebenaggregate und/ oder Nebenabtriebe vor, so erfolgt die Auflösung der Zahn-auf-Zahn-Stellung relativ langsam mit relativ hohem Komfort durch entsprechende Bereitstellung des oder jedes Ansteuersignals durch die Getriebesteuerungseinrichtung 11.

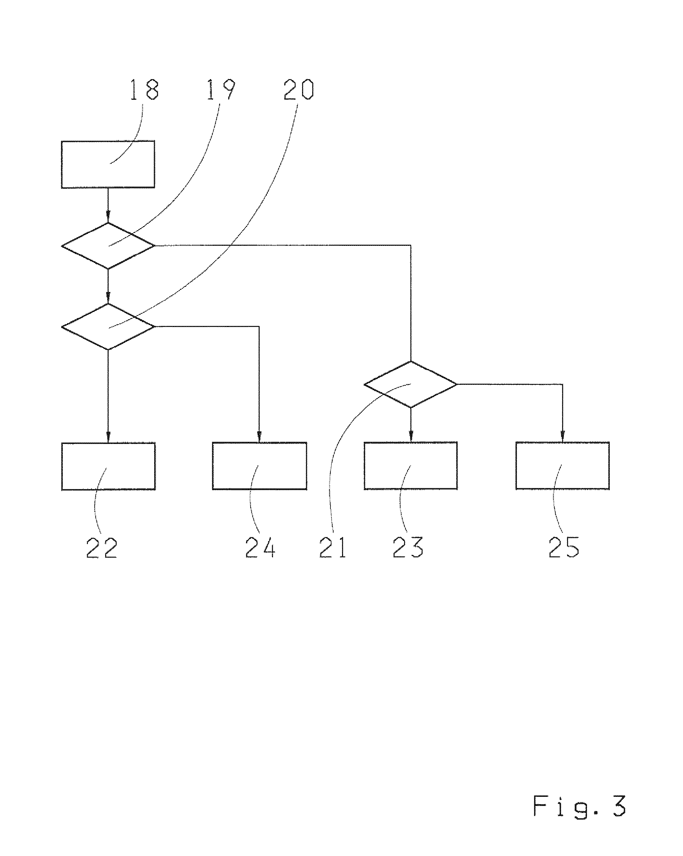

Unter Bezugnahme auf die Signalflussdiagramme der Fig. 2 und 3 werden nachfolgend zwei bevorzugte Ausprägungen der Betriebsweise der erfindungsgemäßen Steuerungseinrichtung bzw. des erfindungsgemäßen Verfahrens beschrieben, wobei im Signalflussdiagramm der Fig. 2 der Block 12 einem Erkennen einer aufzulösenden Zahn-auf-Zahn-Stellung durch die Getriebesteuerungseinrichtung 11 entspricht. Wird in Block des Signalflussdiagramms der Fig. 2 auf eine aufzulösende Zahn-auf-Zahn-Stellung erkannt, so wird nachfolgend in einem Block 13 überprüft, ob eine fahrerseitige Betätigung der Betriebsbremse 9 vorliegt. Wird hierbei im Block 9 festgestellt, dass keine fahrerseitige Betätigung der Betriebsbremse 9 vorliegt, wird auf Block 14 verzweigt, wobei in Block 14 von der Steuerungseinrichtung 11 eine Methode bzw. ein Verfahren zur Auflösung der Zahn-auf-Zahn-Stellung ermittelt wird, die eine Auflösung relativ langsam mit relativ hohem Komfort vorsieht.

In diesem Zusammenhang kann vorgesehen sein, dass nach dieser in Block 14 ausgewählten Methode bzw. dem entsprechenden Verfahren zur relativ langsamen Auflösung der Zahn-auf-Zahn-Stellung mit relativ hohem Komfort zunächst das Getriebe 3 nach Neutral geschaltet wird und anschließend über die elektrische Maschine 5 und/ oder die Fahrkupplung 7 in Verbindung mit dem Verbrennungsmotor 4 Drehzahl und Drehmoment am Getriebeeingang aufgebaut wird. Hierdurch wird die Zahn-auf-Zahn-Stellung am jeweiligen formschlüssigen Schaltelement verlassen, wobei dann, wenn die Drehzahldifferenz am formschlüssigen Schaltelement einen Grenzwert überschreitet, erneut versucht wird, das entsprechende Schaltelement zu schließen.

Wird hingegen in Block 13 festgestellt, dass eine fahrerseitige Betätigung der Betriebsbremse 9 vorliegt, wird ausgehend von Block 13 auf Block 15 verzweigt, wobei in Block 15 überprüft wird, ob der durch die Betätigung der Betriebsbremse 9 ausgelöste Bremsdruck größer oder kleiner als ein Grenzwert ist. Dann, wenn der Bremsdruck größer als ein Grenzwert ist, wird ausgehend von Block 15 auf Block 16 verzweigt, wohingegen dann, wenn der Bremsdruck kleiner als ein Grenzwert ist, ausgehend von Block 15 auf Block 17 verzweigt wird, wobei sowohl in Block 16 als auch in Block 16 jeweils eine Methode bzw. ein Verfahren zur Auflösung der Zahn-auf-Zahn-Stellung von der Getriebesteuerungseinrichtung 11 ermittelt wird, die eine Auflösung der Zahn-auf-Zahn-Stellung relativ schnell mit relativ geringem Komfort vorsieht.

Dieses Verfahren zum relativ schnellen Auslösen der Zahn-auf-Zahn-Stellung mit relativ geringem Komfort kann zum Beispiel vorsehen, dass das Getriebe 3 nicht nach Neutral geschaltet wird, sondern trotz der aufzulösenden Zahn-auf-Zahn-Stellung während des Schließens des formschlüssigen Schaltelements über die elektrische Maschine 5 und/ oder die Kupplung 7 in Verbindung mit dem Verbrennungsmotor 4 am Getriebeeingang Moment aufgebaut wird, um so die Zahn-auf-Zahn-Stellung am Schaltelement schneller aufzulösen.

Im Signalflussdiagramm der Fig. 2 wird bei betätigter Betriebsbremse 9 unabhängig vom Bremsdruck diese Methode bzw. dieses Verfahren gewählt, wobei die Parametrierung des Verfahrens jedoch abhängig vom Bremsdruck erfolgt, nämlich derart, dass dann, wenn der Bremsdruck größer als ein entsprechender Grenzwert ist, in Block 16 dieses relativ schnelle und relativ unkomfortable Verfahren relativ schnell parametriert wird, zum Beispiel durch Aufbringen eines relativ hohen Moments über die elektrische Maschine 5 und/ oder den Verbrennungsmotor 4, wohingegen in Block 17 dieses Verfahren bzw. diese Methode relativ komfortabel parametriert wird, zum Beispiel durch Aufbringen eines relativ geringen Moments durch die elektrische Maschine 5 und/ oder den Verbrennungsmotor 4.

Eine weitere Betriebsweise der erfindungsgemäßen Steuerungseinrichtung 11 zeigt das Signalflussdiagramm der Fig. 3, wobei der Block 18 des Signalflussdiagramms der Fig. 3 wiederum dem Erkennen einer aufzulösenden Zahn-auf-Zahn-Stellung durch die Getriebesteuerungseinrichtung 11 entspricht. Wird eine aufzulösende Zahn-auf-Zahn-Stellung erkannt, so wird nachfolgend auf Block 19 übergegangen.

Anschließend wird in einem Block 19 die Masse des Kraftfahrzeugs überprüft, insbesondere durch Abfragen, ob am Kraftfahrzeug ein Anhänger oder ein Sattel vorhanden ist.

Wird in Block 19 festgestellt, dass kein Anhänger oder Sattel vorhanden ist, so wird ausgehend von Block 19 auf Block 20 verzweigt, anderenfalls, wenn also in Block 19 festgestellt wird, dass am Kraftfahrzeug ein Anhänger oder Sattel vorhanden ist, wird ausgehend von Block 19 auf Block 21 verzweigt.

In Blöcken 20 und 21 wird jeweils überprüft, ob bei einer fahrerseitigen Betätigung des Bremspedals 9 der hierdurch angeforderte Bremsdruck größer oder kleiner als ein Grenzwert ist. Ist der angeforderte Bremsdruck kleiner als ein Grenzwert, so wird ausgehend von Block 20 auf Block 22 und ausgehend von Block 21 auf Block 23 verzweigt, wohingegen dann, wenn in den Blöcken 20 und 21 festgestellt wird, dass der angeforderte Bremsdruck größer als der Grenzwert ist, ausgehend von Block 20 auf Block 24 und ausgehend von Block 21 auf Block 25 verzweigt wird.

In den Blöcken 22 und 23 bestimmt die Getriebesteuerungseinrichtung 11 jeweils eine Methode bzw. ein Verfahren, welches eine Zahn-auf-Zahn-Stellung relativ langsam mit relativ hohem Komfort auflöst, zum Beispiel das oben unter Bezugnahme auf Fig. 2 beschriebene Verfahren, in welchem das Getriebe nach Neutral geschaltet wird.

In Block 22 wird diese Methode bzw. dieses Verfahren relativ komfortabel und in Block 23 wird dieses Verfahren relativ schnell parametriert, nämlich dadurch, dass in Block 22 sämtliche Schritte sequentiell nacheinander ablaufen, wohingegen in Block 23 die entsprechenden Schritte der Methode überlappend durchgeführt werden.

In den Blöcken 24 und 25 bestimmt die Getriebesteuerungseinrichtung 11 jeweils eine Methode bzw. ein Verfahren zur relativ schnellen Auflösung der Zahn-auf-Zahn-Stellung mit relativ geringem Komfort, zum Beispiel das unter Bezugnahme auf Fig. 2 beschriebene Verfahren, in welchem das Getriebe 3 nicht nach Neutral überführt wird, wobei in Block 24 diese Methode relativ komfortabel und in Block 25 diese Methode relativ schnell parametriert wird, zum Beispiel durch entsprechende Beeinflussung des von der elektrischen Maschine 5 und/ oder von der Kupplung 7 und dem Verbrennungsmotor 4 bereitgestellten Moments.

Mit der hier vorliegenden Erfindung wird demnach eine Steuerungseinrichtung eines Kraftfahrzeugs, insbesondere eine Getriebesteuerungseinrichtung 11, und ein Verfahren zum Auflösen von Zahn-auf-Zahn-Stellungen an einem formschlüssigen Schaltelement 6 eines Getriebes 3 vorgeschlagen, mit welchen abhängig von mindestens einer Betriebsbedingung des Kraftfahrzeugs mindestens ein Ansteuersignal für mindestens einen Aktuator zum Auflösen der Zahn-auf-Zahn-Stellung ermittelt wird.

Dies erfolgt derart, dass das Auflösen der Zahn-auf-Zahn-Stellung relativ schnell mit relativ geringem Komfort oder relativ langsam mit relativ hohem Komfort erfolgt, wobei hierbei die Getriebesteuerungseinrichtung 11 eine Methode zur Auflösung der Zahn-auf-Zahn-Stellung auswählen kann und/ oder die entsprechende Methode parametrieren kann, um die Schnelligkeit und/ oder den Komfort der Auflösung der Zahn-auf-Zahn-Stellung individuell an die oder jede berücksichtigte Betriebsbedingung des Kraftfahrzeugs anzupassen.

Hierdurch können Zahn-auf-Zahn-Stellungen an formschlüssigen Schaltelementen situationsbedingt optimal aufgelöst werden.

### Bezugszeichen

- 1: Antriebsaggregat
- 2: Abtrieb
- 3: Getriebe
- 4: Verbrennungsmotor
- 5: elektrische Maschine
- 6: formschlüssiges Schaltelement
- 7: Fahrkupplung
- 8: Getriebebremse
- 9: Betriebsbremse
- 10: Motorsteuerungseinrichtung
- 11: Getriebesteuerungseinrichtung
- 12: Block
- 13: Block
- 14: Block
- 15: Block
- 16: Block
- 17: Block
- 18: Block
- 19: Block
- 20: Block
- 21: Block
- 22: Block
- 23: Block
- 24: Block
- 25: Block

## Patentansprüche

1. Steuerungseinrichtung eines Kraftfahrzeugs, insbesondere Getriebesteuerungseinrichtung (11), die bei Vorliegen einer Zahn-auf-Zahn-Stellung eines formschlüssigen Schaltelements (6) ein Ansteuersignal für mindestens einen Aktuator zum Auflösen der Zahn-auf-Zahn-Stellung ermittelt, **dadurch gekennzeichnet, dass** die Steuerungseinrichtung das oder jedes Ansteuersignal zum Auflösen der Zahn-auf-Zahn-Stellung abhängig von mindestens einer Betriebsbedingung des Kraftfahrzeugs derart ermittelt, dass entweder ein Auflösen der Zahn-auf-Zahn-Stellung schnell mit geringem Komfort oder langsam mit hohem Komfort erfolgt.

2. Steuerungseinrichtung nach Anspruch 1, **dadurch gekennzeichnet, dass** dieselbe das oder jedes Ansteuersignal zum Auflösen der Zahn-auf-Zahn-Stellung abhängig von einer Masse des Kraftfahrzeugs und/ oder abhängig von einer Geschwindigkeit des Kraftfahrzeugs und/ oder abhängig von einer Fahrsituation des Kraftfahrzeugs und/ oder abhängig von einer Achsübersetzung und/ oder abhängig von einem Ziel-Gang der auszuführenden Schaltung und/ oder abhängig von einer angeforderten Schaltdynamik ermittelt.

3. Steuerungseinrichtung nach Anspruch 2, **dadurch gekennzeichnet, dass** dieselbe dann, wenn die Masse des Kraftfahrzeugs relativ groß ist, das oder jedes Ansteuersignal zum schnellen Auflösen der Zahn-auf-Zahn-Stellung mit geringem Komfort ermittelt, wohingegen dieselbe dann, wenn die Masse des Kraftfahrzeugs relativ klein ist, das oder jedes Ansteuersignal zum langsamen Auflösen der Zahn-auf-Zahn-Stellung mit hohem Komfort ermittelt.

4. Steuerungseinrichtung nach Anspruch 2 oder 3, **dadurch gekennzeichnet, dass** dieselbe dann, wenn die Geschwindigkeit des Kraftfahrzeugs relativ groß ist, das oder jedes Ansteuersignal zum schnellen Auflösen der Zahn-auf-Zahn-Stellung mit geringem Komfort ermittelt, wohingegen dieselbe dann, wenn die Geschwindigkeit des Kraftfahrzeugs relativ klein ist, das oder jedes Ansteuersignal zum langsamen Auflösen der Zahn-auf-Zahn-Stellung mit hohem Komfort ermittelt.

5. Steuerungseinrichtung nach einem der Ansprüche 2 bis 4, **dadurch gekennzeichnet, dass** dieselbe dann, wenn eine Übersetzung des Ziel-Gangs der auszuführenden Schaltung des Kraftfahrzeugs relativ klein ist, das oder jedes Ansteuersignal zum schnellen Auflösen der Zahn-auf-Zahn-Stellung mit geringem Komfort ermittelt, wohingegen dieselbe dann, wenn die Übersetzung des Ziel-Gangs relativ groß ist, das oder jedes Ansteuersignal zum langsamen Auflösen der Zahn-auf-Zahn-Stellung mit hohem Komfort ermittelt.

6. Steuerungseinrichtung nach einem der Ansprüche 2 bis 5, **dadurch gekennzeichnet, dass** dieselbe dann, wenn eine Fahrsituation des Kraftfahrzeugs mit einem relativ hohen Fahrwiderstand vorliegt, das oder jedes Ansteuersignal zum schnellen Auflösen der Zahn-auf-Zahn-Stellung mit geringem Komfort ermittelt, wohingegen dieselbe dann, wenn eine Fahrsituation des Kraftfahrzeugs mit einem relativ geringen Fahrwiderstand vorliegt, das oder jedes Ansteuersignal zum langsamen Auflösen der Zahn-auf-Zahn-Stellung mit hohem Komfort ermittelt.

7. Steuerungseinrichtung nach einem der Ansprüche 2 bis 6, **dadurch gekennzeichnet, dass** dieselbe dann, wenn eine Fahrsituation des Kraftfahrzeugs mit mindestens einem aktivierten Nebenaggregat und/ oder Nebenabtrieb vorliegt, das oder jedes Ansteuersignal zum schnellen Auflösen der Zahn-auf-Zahn-Stellung mit geringem Komfort ermittelt, wohingegen dieselbe dann, wenn eine Fahrsituation des Kraftfahrzeugs mit deaktiviertem Nebenaggregat und/ oder Nebenabtrieb vorliegt, das oder jedes Ansteuersignal zum langsamen Auflösen der Zahn-auf-Zahn-Stellung mit hohem Komfort ermittelt.

8. Steuerungseinrichtung nach einem der Ansprüche 2 bis 7, **dadurch gekennzeichnet, dass** dieselbe dann, wenn eine Fahrsituation des Kraftfahrzeugs in einem Off-roadbetrieb vorliegt, das oder jedes Ansteuersignal zum schnellen Auflösen der Zahn-auf-Zahn-Stellung mit geringem Komfort ermittelt, wohingegen dieselbe dann, wenn eine Fahrsituation des Kraftfahrzeugs in einem Straßenbetrieb vorliegt, das oder jedes Ansteuersignal zum langsamen Auflösen der Zahn-auf-Zahn-Stellung mit hohem Komfort ermittelt.

9. Steuerungseinrichtung nach einem der Ansprüche 1 bis 8, **dadurch gekennzeichnet, dass** dieselbe abhängig von der oder jeder Betriebsbedingung des Kraftfahrzeugs eine Methode zum Auflösen der Zahn-auf-Zahn-Stellung und abhängig von der Methode die Ansteuersignale für den oder jeden an der Methode beteiligten Aktuator ermittelt und/ oder dass dieselbe abhängig von der oder jeder Betriebsbedingung des Kraftfahrzeugs für eine Methode zum Auflösen der Zahn-auf-Zahn-Stellung die Parametrierung derselben und abhängig von der Parametrierung die Ansteuersignale für den oder jeden an der Methode beteiligten Aktuator ermittelt.

10. Verfahren zum Auflösen einer Zahn-auf-Zahn-Stellung eines formschlüssigen Schaltelements, wobei die Zahn-auf-Zahn-Stellung durch Ansteuerung mindestens eines Aktuators aufgelöst wird, **dadurch gekennzeichnet, dass** die Ansteuerung des oder jedes Aktuators zum Auflösen der Zahn-auf-Zahn-Stellung abhängig von mindestens einer Betriebsbedingung des Kraftfahrzeugs derart ermittelt, dass entweder ein Auflösen der Zahn-auf-Zahn-Stellung schnell mit geringem Komfort oder langsam mit hohem Komfort erfolgt.

11. Verfahren nach Anspruch 10, **gekennzeichnet dadurch** Merkmale nach einem der Ansprüche 2 bis 9.
